# EUROPEAN PATENT APPLICATION

(11) **EP 4 477 560 A1**
(43) Date of publication of application: **18.12.2024**
(21) Application number: 23178571.8
(22) Date of filing: 12.06.2023
(51) Int. Cl.: B64F 1/36, B64F 1/28, B64D 41/00

(54) **MODULAR POWER GENERATION DEVICE FOR SUPPLYING ELECTRICITY TO AIRCRAFT ON GROUND USING ALTERNATIVE FUELS**

(71) Applicant: H3 Dynamics Holdings Pte. Ltd., Singapore 139950 (SG)
(72) Inventor: Wankewycz, Taras, Paris (FR); Gauthier, Bertrand, Paris (FR); Wadher, Niraj, Paris (FR)
(74) Representative: Schweiger, Martin

(57) **Abstract**

A modular power generation device for supplying electricity to aircraft on ground, comprising: a power unit 1 configured to generate electricity using alternative fuels, said power unit 1 further comprising: - A power generation module 2; - An interface configured to connect with an aircraft as defined by predetermined standards; - An interface configured for interaction with human operators of the device; - Safety systems for the operation of the device; - An interface with a fuel unit 8 for the exchangeable supply of fuel; and - An interface with said fuel unit 8 for the monitoring, command, and control of said fuel unit 8.

## Description

### TECHNICAL FIELD

The present application relates generally to a power generation device that is modular in design, and more specifically to a system that allows for flexible and scalable power generation in various applications.

### BACKGROUND ART

US20110133573 discloses of a ground power unit for providing power to a grounded aircraft. The ground power unit (GPU) provides a range of DC output voltages. The disclosed GPU is controlled using a software-based control algorithm that controls the AC input parameters independently of the DC voltage parameters.

This approach presents limitations.

### PROBLEM STATEMENT

This application addresses the problem of providing power to aircraft through use of non-polluting energy sources and in a manner that allows for easy refueling, maintenance, and repair.

This and other objects are solved by the subject matter of the independent claims. Further improvements are given by the dependent claims.

### SUMMARY

This application involves the provision of power to an aircraft of any type, including but not limited to commercial airplanes and helicopters. This power is conditioned and provided in a manner acceptable to the aircraft defined by type of current transmission, voltage, and phase. The power may be used in continuous supply or charging applications.

This application addresses provides a mobile and interchangeable power and fuel unit for aircraft that can be easily maintained, repaired, and refueled, while also producing no carbon emissions and only generating electricity, water, and heat as by-products. The application also provides accessories and peripherals for connecting the power unit and fuel unit to the aircraft and self-propelled service vehicles.

The application provides a modular power generation device for supplying electricity to aircraft on ground, with a power unit configured to generate electricity using alternative fuels, said power unit further comprising:
- A power generation module;
- An interface configured to connect with an aircraft as defined by predetermined standards;
- An interface configured for interaction with human operators of the device;
- Safety systems for the operation of the device;
- An interface with a fuel unit for the exchangeable supply of fuel; and
- An interface with said fuel unit for the monitoring, command, and control of said fuel unit.

Embodiments of the application are associated with various advantages and/or technical effects.

In a development, the device further comprises a power unit. The addition of a power unit to the device provides a reliable and efficient source of power for the device's operation. The power unit can be easily integrated into the device's existing design, minimizing the need for significant modifications. The power unit can be customized to meet the specific power requirements of the device, ensuring optimal performance.

The device is modular, allowing for easy customization and upgrades. The device is powerful, with a power unit and fuel unit for efficient energy generation, providing accessories and peripherals for easy connections to aircraft and service vehicles.

The device is serviceable, with interchangeable and mobile power and green fuel units for regular maintenance and repair, and with fewer moving parts than current alteratives. The device is environmentally friendly, producing no carbon emissions and only electricity, water, and heat as by-products.

The inclusion of a green fuel unit in the device allows for extended periods of operation without the need for frequent refueling. The fuel unit can be easily refueled or replaced, minimizing downtime for the device. The fuel unit can be designed to meet the specific fuel requirements of the device, ensuring optimal performance.

In a development, the power generation module of the power unit comprises:
- A fuel cell stack
- A balance of plant, including air supply and cooling devices and
- Associated power and control electronics.

The use of a fuel cell stack in the power generation module of the power unit provides a highly efficient and environmentally friendly source of power. The balance of plant, including air supply and cooling devices, ensures that the fuel cell stack operates at optimal conditions, maximizing power output and lifespan. The associated power and control electronics allow for precise monitoring and control of the power unit, ensuring safe and reliable operation.

In a development, the application provides an accessories and peripherals related to the connections between the power unit and the fuel unit, and the power unit and the aircraft. The provision of accessories and peripherals related to the connections between the power unit and the fuel unit, and the power unit and the aircraft, ensures that the device can be easily and safely integrated into existing aircraft systems. The accessories and peripherals can be customized to meet the specific requirements of the aircraft, ensuring optimal performance and compatibility. The accessories and peripherals can be easily installed and maintained, minimizing downtime for the aircraft.

In a development, the power unit and the fuel unit each include forward tow bar attachments for connection to self-propelled service vehicles and/or the other unit. The inclusion of forward tow bar attachments on both the power unit and the fuel unit allows for easy and safe transportation of the units using self-propelled service vehicles. The tow bar attachments ensure that the units can be easily and securely connected to each other or to other equipment, minimizing the risk of damage or injury. The tow bar attachments can be designed to meet the specific requirements of the service vehicles or other equipment, ensuring optimal compatibility and safety.

In a development, the fuel unit includes an additional tow bar attachment at the rear for connection to self-propelled service vehicles to facilitate the exchange of the unit. The additional tow bar attachment at the rear of the fuel unit allows for easy connection to self-propelled service vehicles, reducing the time and effort required for exchanging the unit. The tow bar attachment also ensures a secure and stable connection between the fuel unit and the service vehicle, minimizing the risk of accidents or damage during transportation. The use of self-propelled service vehicles for exchanging the fuel unit eliminates the need for additional equipment or personnel, reducing operational costs and increasing efficiency.

In a development, the power unit and the fuel unit are interchangeable and completely mobile, functioning together as a single unit. The interchangeability and mobility of the power unit and the fuel unit allow for greater flexibility in deployment and use, as they can be easily moved and connected to different equipment or systems. The ability to function together as a single unit also simplifies the operation and maintenance of the equipment or system, reducing the need for complex wiring or control systems. The mobility of the units also allows for easy relocation or reconfiguration of the equipment or system, adapting to changing operational needs or environments.

In a development, the power unit and the fuel unit are configured for disconnection and transport to facilitate regular maintenance, repair, or refuelling. The configuration of the power unit and the fuel unit for disconnection and transport facilitates regular maintenance, repair, or refuelling, reducing downtime and increasing operational availability. The ease of disconnection and transport also allows for more efficient use of resources, as the units can be transported to a central location for maintenance or repair, rather than requiring on-site servicing. The ability to transport the units also reduces the need for specialized maintenance or repair personnel, as the units can be serviced at a central location by a dedicated team.

In a development, the fuel unit is configured to be replaced with another fuel unit if the level of fuel is reduced to below a predetermined minimum for the next operation. The configuration of the fuel unit to be replaced with another unit if the fuel level is reduced to below a predetermined minimum ensures continuous operation of the equipment or system, reducing downtime and increasing productivity. The ability to replace the fuel unit also allows for more efficient use of resources, as the depleted unit can be refuelled and reused, rather than requiring disposal or recycling. The use of replaceable fuel units also reduces the need for on-site refuelling equipment or personnel, as the units can be refuelled at a central location and transported to the equipment or system as needed.

In a development, the power unit is configured to produce no carbon emissions, and the only by-products are electricity, water, and heat. The configuration of the power unit to produce no carbon emissions and only by-products of electricity, water, and heat reduces the environmental impact of the equipment or system, contributing to sustainability and reducing carbon footprint. The absence or reduction of carbon emissions also reduces the need for complex exhaust systems or pollution control equipment, simplifying the design and operation of the equipment or system. The production of electricity, water, and heat as by-products also increases the efficiency of the power unit, as these by-products can be used for other purposes, reducing waste and increasing resource utilization.

### BRIEF DESCRIPTION OF DRAWINGS

The present disclosure is illustrated by way of example and lot limited in the accompanying figures in which like reference numerals indicate similar elements. Embodiments of the application will now be described with reference to the attached drawings
- Figure 1: shows a Concept sketch.
- Figure 2: shows a System layout.
- Figure 3: shows a Device annotation.

### DETAILED DESCRIPTION

### DEFINITIONS

The term "power unit" is used herein to refer to a device configured to generate electricity using alternative fuels, and the only by-products are electricity, water, and heat.

The term "power generation module" is used herein to refer to a device configured to generate electricity using alternative fuels.

An "aircraft interface for high voltage cable attachment" stands for a connection for the attachment of high voltage cables, the power supply of the aircraft to the power unit, and in particular the connection of the power supply of the aircraft to the power unit of the device.

The term "HMI " designates a system and interface by which the operator can communicate with and control the system.

The term "safety " stands for the safety systems that protect the power unit by detecting and acting upon malfunction and/or safety hazards.

The "connection for fuel supply hose from fuel unit" can be a hose connecting the power unit and the aircraft.

The "connection for electrical power, monitoring, command and control signals to fuel unit" provides data transfer for the operation and the control of the fuel unit.

The term "fuel unit" is used herein to refer to the system used for the storage and transport of fuel, for example pure hydrogen.

The term "fuel storage module" is used herein to refer to a device comprising exchangeable high pressure cylinders and/or a fuel conditioning and distribution system.

A "fuel conditioning and distribution module " designates: the combination of a fuel tank, a fuel filter, a high pressure pump, a fuel conditioning device, a fuel distribution system and a fuel flow control system, wherein the fuel tank, the fuel filter, the high pressure pump, the fuel conditioning device and the fuel distribution system supply fuel to the power

An "electronics module for fuel supply , conditioning and distribution control" designates: the module that includes control electronics, power electronics, and interface electronics for the fuel unit.

The term "connection for fuel supply hose toward power unit" stands for a hose for the supply and/or return of fuel.

The term "connection for electrical power, monitoring , command and control signals from power unit" designates the electrical connections between the power unit and the aircraft.

A "fuel cell stack" can be a fuel cell device or a fuel cell system, in which the fuel used in the fuel cell device can be hydrogen.

The term "balance of plant including air supply, thermal management and water management systems" stands for the main components that are essential for the operation of the power generation module.

A "supply hose for fuel of an appropriate construction for fuel to be used" designates: a hose which is connected to a fuel supply line of the device and which is configured to be used to supply the fuel to the fuel unit located in the power unit.

An "electrical connection for transfer of power and command and control signals" designates: a connection for the transfer of power and command and control signals between the power unit and the aircraft, and optionally between the power unit and the fuel unit, and optionally between the power unit and the self-propelled service vehicle.

The term "modular power generation device" is used herein to refer to a device that can be configured to produce electricity using alternative fuels.

The term "self-propelled service vehicles" is used herein to refer to self-propelled service vehicles that are commonly used in airports to provide various services on the ramp to an aircraft.

The term "safety systems" is used herein to refer to all types of safety measures for the operation of the device.

The term "electricity to aircraft" is used herein to refer to all types of aircraft that use electricity.

A "supply of fuel" designates: the supply of alternative fuels to the power generation module, such as gas, liquid, or solid fuels.

The "balance of plant" is referring to the supporting components and auxiliary systems of a power plant needed to deliver the energy, other than the generating unit itself.

The term "forward tow bar attachments for connection" is used herein to refer to an attachment at the power unit to a self-propelled service vehicle.

The term "level of fuel" can be used to refer to the amount of fuel required for operation.

The term "human operators" as used herein refers to human operators of the device, such as pilots or service staff.

The term "exchangeable supply" is used herein to refer to the supply of fuel from a power generation device such as a fuel cell, a fuel conditioning and distribution system, or a fuel unit.

The term "forward tow bar attachments" is used herein to refer to an attachment at the front of the power unit and the fuel unit for connection to self-propelled service vehicles and/or other units.

An "alternative fuel" designates: any fuel that is not diesel or petrol (petroleum-based).

A "predetermined standard" designates: the standards defined by ISO 6858, the contents and additional referenced standards of which are incorporated by reference herein.

A "system monitoring" designates: all the functions performed by the system in order to monitor the operating state of the system and its components and their functionalities.

An "associated power and control electronics" designates: any type of electrical or electronic system used for the control and/or monitoring of the operation and/or safety of the device.

The term "regular maintenance" includes scheduled maintenance such as repair and/or replacement of parts.

The term "predetermined minimum", as used herein, refers to a level of fuel required for a specific type of operation.

A "carbon emission" designates the amount of CO2 emission in the entire process, from the production of the fuel and the electricity to the use of the electricity by the aircraft.

The "power unit" comprises the "power generation module" and the "fuel unit". The "power generation module" is a part of the "power unit" and contains the "fuel cell stack". The "fuel unit" is also a part of the "power unit" and contains the "fuel storage module". The "fuel cell stack" belongs to the "power generation module" and the "fuel storage module" belongs to the "fuel unit". The "power unit" interacts with the "fuel unit" and they are positioned with respect to one another, touch each other, and are connected conductively with each other. The "fuel unit" also interacts with the "power unit" and they are positioned with respect to one another, touch each other, and are connected conductively with each other.

The device according to the application comprises a mobile, potentially self-propelled pair of vehicles, that is intended to be used for ground power applications for a range of aircraft. This application provides an aircraft ground power unit which can be used with alternative fuels for reduced or zero emissions operations. This is to be achieved by using two separate units which together function as a ground power unit 1 to provide electrical power for aircraft on ground. The device uses a fuel cell to generate DC power which is then conditioned for use with aircraft. This can be used for supplying the loads on ground but may be extended to battery-electric aircraft charging for future aircraft. The two-unit design is intended to facilitate operations using alternative fuel sources and to allow for longer autonomy on such fuels.

The application provides the following components and devices:
Power unit 1
Power generation module 2
Aircraft interface for high voltage cable attachment 3
HMI with control panel 4
Safety systems including, but not limited to, venting, pressure relief, fire suppression Connection for fuel supply hose from fuel unit 6
Connection for electrical power, monitoring, command and control signals to fuel unit 8 Fuel unit 8
Fuel storage module 9
Fuel conditioning and distribution module to prepare fuel before supply to power unit 10 Electronics module for fuel supply, conditioning and distribution control
Safety systems including, but not limited to, venting, pressure relief, fire suppression Connection for fuel supply hose toward power unit 12
Connection for electrical power, monitoring, command and control signals from power unit 1
Power generation module 2 (Itema)
Fuel cell stack 15
Balance of plant including air supply, thermal management and water management systems
Control system which commands both units based on user inputs 17
Supply hose for fuel of an appropriate construction for fuel to be used 18
Electrical connection for transfer of power and command and control signals 19

The present application relates to a modular power generation device for supplying electricity to aircraft on ground using alternative fuels.

An aircraft may refer to, but is not limited to, passenger aeroplanes (including private, business or commercial aeroplanes), rotorcraft, and unmanned aerial vehicles. It is believed that such a device can be used to power any such aircraft.

Alternative fuels refer to those which are not hydrocarbon-based.

The device comprises of two separate units which together can provide ground power to an aircraft independently of any utility supply and using alternative fuels. The device is fully mobile. It may or may not be self-propelled.

In the case where the device is not self-propelled, it will be towable using standard servicing vehicles through the use of tow bar attachments.

One unit ("power unit 1") of the device will generate the electrical power and supply it to the aircraft; the other ("fuel unit 8") will store the fuel and condition it to a state to be supplied to the power unit 1.

The device may also be referred to as a ground power unit 1. The power unit 1 may also be referred to as the power generation unit or electrical power generator. The fuel unit 8 may also be referred to as the fuel storage unit or a name as appropriate for the fuel used, for example, hydrogen unit or hydrogen storage unit.

The power unit 1 will house the power generator consisting of a fuel cell system, associated equipment and power electronics. Safety devices will be installed in accordance with airport and aircraft requirements.

The power unit 1 may or may not contain an inverter and/or DC/DC depending on the final application of the device.

The power unit 1 will produce no carbon emissions. The only by-products will be electricity, water and heat.

The fuel unit 8 consists of the fuel storage, conditioning and distribution systems; refuelling ports; control and power electronics; and safety devices.

The fuel unit 8 may use fixed fuel storage containers, or may be equipped with removable and replaceable fuel containers.

Fuel may or may not be stored under pressure - containers will be adapted to the properties of the fuel to be used.

The enclosures of each unit are of durable material suitable for the operational environment. Equally, the units are mounted on durable chassis of a type appropriate for the expected operations.

Both units are independent and completely mobile, but function together as a single unit. They are connected to facilitate the supply of fuel to the power unit 1 and to provide power and control capabilities to the fuel unit 8.

Both units are interchangeable. A fuel unit 8 may be replaced with another if the level of fuel is reduced to below the acceptable minimum for the next operation.

Both units may be transported to facilitate regular maintenance or repair. The fuel unit 8 may be disconnected and transported to facilitate fuelling.

### Items

1. "Power unit 1" → A vehicle used for the transport and enclosure of a power generating device comprising:
   a. A power generation module 2;
   b. An interface with an aircraft as defined in the appropriate standards;
   c. An interface with human operators of the device;
   d. Systems as required for the safe operation of the device;
   e. An interface with the "fuel unit 8" for the exchangeable supply of fuel; and
   f. An interface with the "fuel unit 8" for the monitoring, command and control of the "fuel unit 8".
2. "Fuel unit 8" → A vehicle used for the transport and enclosure of a fuel supply comprising:
   a. A fuel storage module 9 comprising exchangeable high pressure cylinders:
   b. A fuel conditioning and distribution system;
   c. A control systems including power electronics and system monitoring;
   d. Systems as required for the safe operation of the device;
   e. An interface with the "power unit 1" for the supply of fuel; and
   f. An interface with the "power unit 1" for the monitoring, command and control of the "fuel unit 8"
3. Item according to Item 1 or item 2 above, wherein the power generation module 2 comprises:
   a. a fuel cell stack 15;
   b. its balance of plant (including air supply and cooling devices); and
   c. associated power and control electronics.
   Item 4. Accessories and peripherals related to the connections between the two units according to Items 1 and 2, and the "power unit 1" the aircraft
4. Item according to one of the items above, with a forward tow bar attachments for connection to self-propelled service vehicles and/or the other unit if required.
5. Item according to one of the items above, with an additional tow bar attachment at the rear of the "fuel unit 8" for connection to self-propelled service vehicles to facilitate the exchange of the unit.

The present application relates to a modular power generation device for supplying electricity to aircraft on ground using alternative fuels. The device is a mobile pair of vehicles that can be used for ground power applications for a range of aircraft.

The device comprises two separate units, namely the power unit 1 and the fuel unit 8. The power unit 1 generates the electrical power and supplies it to the aircraft, while the fuel unit 8 stores the fuel and conditions it to a state to be supplied to the power unit 1. Both units are independent and completely mobile, but function together as a single unit.

The power unit 1 houses the power generator comprising a fuel cell system, associated equipment, and power electronics. The fuel cell stack 15 is the main component of the power generation module 2, which also includes the balance of plant and associated power and control electronics. The power unit 1 may or may not contain an inverter and/or DC/DC depending on the final application of the device.

The fuel unit 8 comprises the fuel storage, conditioning, and distribution systems, refuelling ports, control and power electronics, and safety devices. The fuel unit 8 may use fixed fuel storage containers or may be equipped with removable and replaceable fuel containers. Fuel may or may not be stored under pressure, and the containers will be adapted to the properties of the fuel to be used.

Both units are interchangeable, and a fuel unit 8 may be replaced with another if the level of fuel is reduced to below the acceptable minimum for the next operation. Both units may be transported to facilitate regular maintenance or repair. The fuel unit 8 may be disconnected and transported to facilitate fuelling.

The power unit 1 is equipped with an aircraft interface for high voltage cable attachment 3 and an HMI with control panel 4. Safety systems, including but not limited to venting, pressure relief, and fire suppression, are also installed in accordance with airport and aircraft requirements. The power unit 1 is connected to the fuel unit 8 through a connection for fuel supply hose from fuel unit 6 and a connection for electrical power, monitoring, command, and control signals to fuel unit 8.

The fuel unit 8 is connected to the power unit 1 through a connection for fuel supply hose toward power unit 12 and a connection for electrical power, monitoring, command, and control signals from power unit 1. The electronics module for fuel supply, conditioning, and distribution control is also installed in the fuel unit 8.

The enclosures of each unit are of durable material suitable for the operational environment. Equally, the units are mounted on durable chassis of a type appropriate for the expected operations.

Accessories and peripherals related to the connections between the two units and the power unit 1 and the aircraft are also included. Forward tow bar attachments for connection to self-propelled service vehicles and/or the other unit if required are provided according to Items 1 and 2. An additional tow bar attachment at the rear of the fuel unit 8 for connection to self-propelled service vehicles to facilitate the exchange of the unit is also provided according to Items 1 and 5.

In summary, the present application provides a modular power generation device for supplying electricity to aircraft on ground using alternative fuels. The device is a mobile, potentially self-propelled pair of vehicles that can be used for ground power applications for a range of aircraft. The two-unit design is intended to facilitate operations using alternative fuel sources and to allow for longer autonomy on such fuels.

In the figures, the same or similar features are referenced by the same reference numerals.

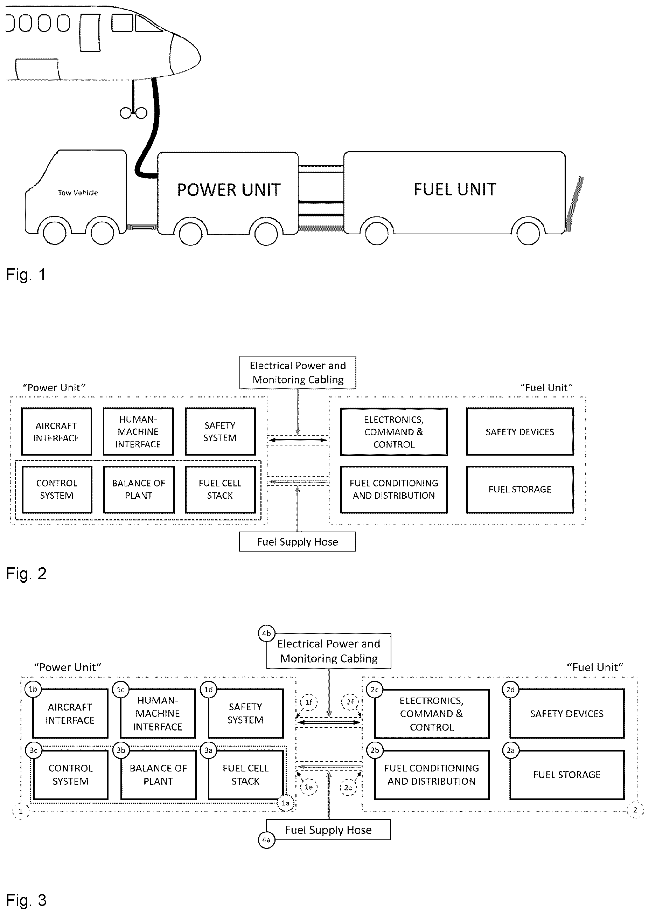

Figure 1 shows a modular power generation device for supplying electricity to aircraft on the ground. The device includes a power unit 1 that generates electricity using alternative fuels. The power unit 1 comprises a power generation module 2, an interface for connecting with an aircraft, an interface for interaction with human operators, safety systems, and interfaces for the exchangeable supply of fuel and monitoring, command, and control of the fuel unit 8. The device also includes a fuel unit 8 that supplies fuel to the power unit 1, which comprises a fuel storage module 9, fuel conditioning and distribution system, control systems, safety systems, and interfaces for the supply of fuel and monitoring, command, and control of the fuel unit 8. The power generation module 2 of the power unit 1 includes a fuel cell stack 15, balance of plant, and associated power and control electronics. The device also includes accessories and peripherals related to the connections between the power unit 1 and the fuel unit 8, and the power unit 1 and the aircraft. The power unit 1 and the fuel unit 8 are interchangeable and completely mobile, functioning together as a single unit. The power unit 1 is configured to produce no carbon emissions, and the only by-products are electricity, water, and heat.

Figure 2 shows a modular power generation device for supplying electricity to aircraft on the ground. The device includes a power unit 1 and a fuel unit 8. The power unit 1 generates electricity using alternative fuels and includes a power generation module 2, an interface for connecting with an aircraft, an interface for interaction with human operators, safety systems, and interfaces for the exchangeable supply of fuel and monitoring, command, and control of the fuel unit 8. The fuel unit 8 supplies fuel to the power unit 1 and includes a fuel storage module 9, a fuel conditioning and distribution system, control systems, safety systems, and interfaces for the supply of fuel and monitoring, command, and control of the fuel unit 8. The power generation module 2 of the power unit 1 includes a fuel cell stack 15, a balance of plant, and associated power and control electronics. The device also includes accessories and peripherals for connections between the power unit 1, fuel unit 8, and aircraft, and tow bar attachments for connection to self-propelled service vehicles. The power unit 1 and fuel unit 8 are interchangeable and mobile, functioning together as a single unit, but can be disconnected and transported for maintenance, repair, or refuelling. The power unit 1 produces no carbon emissions, and the only by-products are electricity, water, and heat.

Figure 3 shows a modular power generation device for supplying electricity to aircraft on the ground. The device includes a power unit 1 and a fuel unit 8, which are interchangeable and completely mobile, functioning together as a single unit. The power unit 1 includes a power generation module 2, an interface for connecting with an aircraft, an interface for interaction with human operators, safety systems, and interfaces for the exchangeable supply of fuel and for monitoring, commanding, and controlling the fuel unit 8. The power generation module 2 includes a fuel cell stack 15, a balance of plant, and associated power and control electronics. The fuel unit 8 includes a fuel storage module 9 with exchangeable high-pressure cylinders, a fuel conditioning and distribution system, control systems, safety systems, and interfaces for the supply of fuel and for monitoring, commanding, and controlling the power unit 1. The device also includes accessories and peripherals related to the connections between the power unit 1 and the fuel unit 8, and the power unit 1 and the aircraft. The power unit 1 and the fuel unit 8 each include forward tow bar attachments for connection to self-propelled service vehicles and/or the other unit, and the fuel unit 8 includes an additional tow bar attachment at the rear for connection to self-propelled service vehicles to facilitate the exchange of the unit. The power unit 1 is configured to produce no carbon emissions, and the only by-products are electricity, water, and heat.

Figure 1 shows :The fuel unit 8 is a member of the fuel storage module 9, which contains or comprises the fuel unit 8. Additionally, the power unit 1 is a part of the fuel unit 8, which belongs to or includes the power unit 1.

Figure 2 shows :The power generation module 2 is a component of the fuel cell stack 15, as it is a part of or a member of the stack. Alternatively, it can be said that the power generation module 2 belongs to or is included in the fuel cell stack 15, or that the fuel cell stack 15 contains or comprises the power generation module 2.

Similarly, the power unit 1 is a component of the power generation module 2, as it is a part of or a member of the module. Alternatively, it can be said that the power unit 1 belongs to or is included in the power generation module 2, or that the power generation module 2 contains or comprises the power unit 1.

### REFERENCE NUMERAL LIST

1 power unit
2 power generation module
3 aircraft interface for high voltage cable attachment
4 hmi with control panel
5 safety systems including, but not limited to, venting, pressure relief, fire suppression
6 connection for fuel supply hose from fuel unit
7 connection for electrical power, monitoring, command and control signals to fuel unit
8 fuel unit
9 fuel storage module
10 fuel conditioning and distribution module to prepare fuel before supply to power unit
11 electronics module for fuel supply, conditioning and distribution control
12 connection for fuel supply hose toward power unit
13 connection for electrical power, monitoring, command and control signals from power unit
14 power generation module (item 1a)
15 fuel cell stack
16 balance of plant including air supply, thermal management and water management systems
17 control system which commands both units based on user inputs
18 supply hose for fuel of an appropriate construction for fuel to be used
19 electrical connection for transfer of power and command and control signals

## Claims

1. A modular power generation device for supplying electricity to aircraft on ground, comprising a power unit (1) configured to generate electricity using alternative fuels, said power unit (1) further comprising:
- a power generation module (2);
- an interface configured to connect with an aircraft as defined by predetermined standards;
- an interface configured for interaction with human operators of the device;
- safety systems for the operation of the device;
- an interface with a fuel unit (8) for the exchangeable supply of fuel; and
- an interface with said fuel unit (8) for the monitoring, command, and control of said fuel unit (8).

2. A modular power generation device according to Claim 1, wherein the device further comprises a fuel unit (8) configured to supply fuel to the power unit (1), said fuel unit (8) further comprising:
- a fuel storage module (9) comprising exchangeable high pressure cylinders:
- a fuel conditioning and distribution system;
- Control systems, including power electronics and system monitoring;
- Safety systems for the operation of the device;
- an interface with the power unit (1) for the supply of fuel; and
- an interface with the power unit (1) for the monitoring, command, and control of the fuel unit (8).

3. A modular power generation device according to Claim 1 or Claim 2, wherein the power generation module (2) of the power unit (1) comprises:
- a fuel cell stack (15);
- a balance of plant, including air supply and cooling devices; and
- associated power and control electronics.

4. A modular power generation device according to one of Claims 1 to 3, further comprising accessories and peripherals related to the connections between the power unit (1) and the fuel unit (8), and the power unit (1) and the aircraft.

5. A modular power generation device according to one of the aforementioned Claims, wherein the power unit (1) and the fuel unit (8) each include forward tow bar attachments for connection to self-propelled service vehicles and/or the other unit.

6. A modular power generation device according to one of the aforementioned Claims, wherein the fuel unit (8) includes an additional tow bar attachment at the rear for connection to self-propelled service vehicles to facilitate the exchange of the unit.

7. A modular power generation device according to one of the aforementioned Claims, wherein the power unit (1) and the fuel unit (8) are interchangeable and completely mobile, functioning together as a single unit.

8. A modular power generation device according to one of the aforementioned Claims, wherein the power unit (1) and the fuel unit (8) are configured for disconnection and transport to facilitate regular maintenance, repair, or refuelling.

9. A modular power generation device according to one of the aforementioned Claims, wherein the fuel unit (8) is configured to be replaced with another fuel unit (8) if the level of fuel is reduced to below a predetermined minimum for the next operation.

10. A modular power generation device according to one of the aforementioned Claims, wherein the power unit (1) is configured to produce no carbon emissions, and the only by-products are electricity, water, and heat.
